# EUROPÄISCHE PATENTSCHRIFT

(11) **EP 0 415 925 B1**
(45) Veröffentlichungstag und Bekanntmachung des Hinweises auf die Patenterteilung: **21.07.1993**
(21) Anmeldenummer: 89900217.4
(22) Anmeldetag: 29.11.1988
(51) Int. Cl.: G02C 5/14

(54) **BÜGEL FÜR BRILLENGESTELL**
SIDE-MEMBER FOR SPECTACLE FRAMES
BRANCHE POUR MONTURES DE LUNETTES

(30) Priorität: 12.12.1987 DE 8716445 U
(43) Veröffentlichungstag der Anmeldung: 13.03.1991
(73) Patentinhaber: STEINWACHS, Peter, D-64521 Gross-Gerau (DE)
(72) Erfinder: STEINWACHS, Peter, D-64521 Gross-Gerau (DE)
(74) Vertreter: Katscher, Helmut, Dipl.-Ing.
(86) Internationale Anmeldenummer: EP8801085
(87) Internationale Veröffentlichungsnummer: WO8905469

(56) Entgegenhaltungen:
- EP-A- 0 202 556
- DE-U-83 365 265
- DE-U-87 164 450
- FR-A- 1 453 932
- FR-A- 2 534 387
- GB-A- 524 366
- GB-A- 637 543

## Beschreibung

Die Erfindung betrifft einen Bügel für Brillengestell mit einem länglichen Bügelsteg, der in einem demgegenüber verbreiterten Ohrteil endet.

Üblicherweise ist bei Brillengestellen die Brillenfassung über zwei Scharniere jeweils mit einem klappbaren Bügel verbunden.

Die beiden Bügel weisen jeweils einen länglichen Bügelsteg auf, der zu einem Ohrteil verläuft. Das Ohrteil ist üblicherweise verbreitert, um eine hinter dem Ohr am Kopf des Brillenträgers anliegende Fläche zu bilden. Beim Anpassen einer Brille müssen insbesondere die Ohrteile so verformt werden, daß sie der Schädelform des Brillenträgers angepaßt sind und einen sicheren Sitz der Brille gewährleisten, ohne jedoch Druckstellen zu verursachen.

Die hierbei erforderliche Verformung des Brillenendes wird dadurch erschwert, daß dieses Brillenende üblicherweise breit und damit auch steif ausgeführt ist. Schmale Ohrteile, die ebenfalls gebräuchlich sind, sind zwar leichter zu verformen, üben jedoch einen stärkeren Druck aus und können deshalb Unbequemlichkeiten beim Tragen der Brille verursachen.

Bei einem bekannten Brillenbügel (EP-A-202 556) besteht das Ohrteil aus zwei im Abstand zueinander verlaubenden länglichen Teilen, nämlich einem äußeren, starren Teil und einem inneren, am Ohr des Benutzers anliegenden Streifen, der nach Art einer Schnur weich und biegsam ausgeführt ist. Der vom Ohrteil auf den Kopf des Benutzers ausgeübte seitliche Druck konzentriert sich hierbei auf das schmale Teil und verteilt sich nicht auf ein breiteres Ohrteil.

Bei einem anderen bekannten Brillenbügel (FR-A-2 534 387) ist das Ohrteil über den größten Teil seiner Länge als dünnes metallisches Innenteil mit einem Kunststoffüberzug ausgeführt. Nur am äußersten Ende sind bei dem starren Innenteil zwei Durchbrüche vorgesehen, deren Länge aber im Vergleich zum gesamten Ohrteil sehr gering ist. Der Kunststoffüberzug weist jedoch keine Durchbrüche auf.

Bei einem bekannten Bügel für ein Brillengestell der eingangs genannten Gattung (DE-U-8 336 526) weist das Ohrteil ebenfalls über den größten Teil seiner Länge nur ein schmales metallisches Innenteil auf, das von einem weichen Kunststoff überzogen ist, um eine weichere Anlagefläche am Kopf des Benutzers zu schaffen. Nur am äußersten Ende des metallischen Innenteils ist als Durchbruch ein Auge vorgesehen, das ebenfalls mit dem weichen Kunststoff ummantelt ist. Das Auge ergibt ein verbreitertes Ende des Ohrteils und ermöglicht eine bessere Verformung des weichen Kunststoffmaterials in diesem Bereich beim Tragen der Brille. Die Verformbarkeit des Ohrteils bei der Anpassung der Brille wird hierbei aber kaum beeinflußt; eine verbreiterte Anlagefläche am Kopf des Benutzers wird ausschließlich durch die Verwendung von weichem Kunststoffmaterial erreicht.

Aufgabe der Erfindung ist es daher, einen Bügel für ein Brillengestell der eingangs genannten Gattung zu schaffen, der zum Anpassen der Brille ausreichend leicht verformbar ist, andererseits aber eine gute Verteilung der Druckkräfte gewährleistet.

Diese Aufgabe wird erfindungsgemäß dadurch gelöst, daß das Ohrteil aus mindestens zwei schmalen länglichen Holmen aus im wesentlichen starrem Material besteht, die im Abstand zueinander angeordnet und an ihren beiden Enden starr miteinander verbunden sind und zwischen denen sich ein länglicher Durchbruch befindet.

Die beiden im Abstand zueinander angeordneten Holme verteilen die von der Brille auf den Kopf des Brillenträgers ausgeübte Druckkraft in solcher Weise, daß der Brillenträger dies wie eine breitflächige Verteilung der Druckkraft empfindet. Da die Querschnittsfläche dieser beiden Holme verhältnismäßig gering ist, kann das Ohrteil in jeder gewünschten Richtung beim Anpassen der Brille leicht verformt werden, so daß ein optimale Anpassungsmöglichkeit gegeben ist.

Vorzugsweise sind die beiden Holme am äußeren Ende zu einem undurchbrochenen Flächenstück verbunden. Durch dieses undurchbrochene Flächenstück entsteht im Bereich des äußersten Ohrteils eine meist breitere, ununterbrochene Stützfläche, die für die Kraftübertragung besonders günstig ist. Dabei ist es nicht nachteilig, daß dieses undurchbrochene äußerste Ohrteil im Gegensatz zu dem in die beiden Holme aufgeteilten Bereich weniger verformbar ist, weil das Flächenstück am äußersten Ohrteil selbst nicht oder nur wenig verformt werden muß. Die Verformung erfolgt größtenteils in dem Bereich, der in die beiden Holme unterteilt ist.

Da die zur Anpassung der Brille erforderliche Verformung nicht nur in dem hinter dem Ohr liegenden Abschnitt erfolgen muß, sondern in den meisten Fällen bereits in dem über dem Ohr liegenden Bügelabschnitt, ist in weiterer Ausgestaltung des Erfindungsgedankens vorgesehen, daß sich der die beiden Holme bildende Durchbruch über den Übergang vom abgewinkelten Ohrteil zum länglichen Bügelsteg hinaus bis in den geraden Teil des Bügelstegs und damit in den über dem Ohr liegenden Abschnitt erstreckt.

Weitere vorteilhafte Ausgestaltungen des Erfindungsgedankens sind Gegenstand weiterer Unteransprüche.

Die Erfindung wird nachfolgend an Ausführungsbeispielen näher erläutert, die in der Zeichnung dargestellt sind. Es zeigt:
Fig. 1 ein Brillengestell in einer Seitenansicht,
Fig. 2 in einer vergrößerten Teilansicht ein Ohrteil eines Brillengestells gemäß einer abgewandelten Ausführungsform und
Fig. 3 ebenfalls in einer vergrößerten Teilansicht eine andere Ausführungsform eines Ohrteils eines Brillengestells.

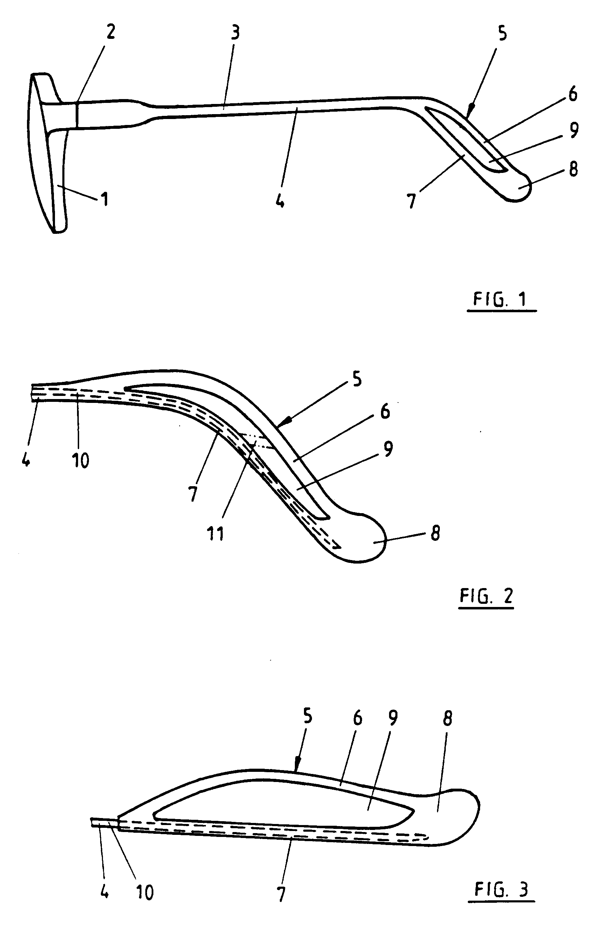

Das in Fig. 1 in einer Seitenansicht dargestellte Brillengestell weist eine Brillenfassung 1 auf, an der in herkömmlicher Weise über jeweils ein Scharnier 2 zwei Brillenbügel 3 abgelenkt sind. Der Brillenbügel 3 besteht aus einem länglichen, schmalen, im wesentlichen geraden Bügelsteg 4 und einem sich daran anschließenden verbreiterten Ohrteil 5, das bei den Ausführungsbeispielen nach den Fig. 1 und 2 nach unten leicht abgewinkelt ist.

Das Ohrteil 5 besteht aus zwei schmalen Holmen 6 und 7. die im wesentlichen parallel und im Abstand zueinander angeordnet sid. Am äußeren Ende des Brillenbügels 3 sind die beiden Holme 6 und 7 zu einem Flächenstück 8 miteinander verbunden, dessen Breite etwas größer als die Breite des Ohrteils 5 im Bereich der beiden Holme 6 und 7 ist.

Die beiden Holme 6 und 7 sind durch einen länglichen Durchbruch 9 voneinander getrennt, der sich bei dem Ausführungsbeispiel nach Fig. 11 über das gesamte abgewinkelte Ohrteil 5 bis zum Flächenstück 8 erstreckt. Der Durchbruch 9 verjüngt sich an seinen beiden Enden.

Bei dem Ausführungsbeispiel nach Fig. 1 reicht der Durchbruch 9 bis zum Übergang vom geraden Bügelsteg 4 in das abgewinkelte Ohrteil 5. Das Ausführungsbeispiel nach Fig. 2 unterscheidet sich hiervon im wesentlichen dadurch, daß der Durchbruch 8 sich weiter nach vorn erstreckt, nämlich bis in den geraden Teil des Bügelstegs 4.

Die geteilte Ausführung des Stegendes 5, der aus den beiden dünnen Holmen 6 und 7 besteht, macht das Ohrteil 5 leichter verformbar, so daß eine einfache, leichte, dabei optimale Anpassung der Brille durch Verformung des Ohrteils 5 ermöglicht wird. Bei der Ausführung nach Fig. 2 ist hierbei nicht nur der hinter dem Ohr des Brillenträgers liegende abgewinkelte Teil des Ohrteils 5 verformbar, sondern auch der über dem Ohr liegende Abschnitt, der hierbei auch bereits aus den beiden Holmen 6 und 7 besteht.

In Fig. 2 ist auch dargestellt, daß sich eine Metalleinlage 10, die zur Versteifung und gegebenenfalls Befestigung des länglichen Bügelstegs 4 dient, in das Ohrteil 5 hinein und durch den unteren Holm 7 erstreckt. Beim Ausführungsbeispiel nach Fig. 2 ist angedeutet, daß die Metalleinlage 10 im undurchbrochenen Flächenstück 8 endet.

In Fig. 3 ist ein Ausführungsbeispiel eines Ohrteils 5 gezeigt, das sich im Gegensatz zu den vorher beschriebenen Ausführungsformen angenähert geradlinig in Verlängerung des länglichen Bügelstegs 4 erstreckt. Hierbei ist außerdem die Möglichkeit angedeutet, daß die Metalleinlage 10 den geraden Bügelsteg 4 ohne Kunststoffumhüllung bildet. Die Metalleinlage 10 erstreckt sich durch den unteren Holm 7 bis in das ununterbrochene Flächenstück 8 am äußeren Ohrteil.

Das Ohrteil 5 wird aus den üblichen Kunststoffen hergestellt, die auch schon bisher zur Herstellung von Brillengestellen verwendet werden und die eine Verformung unter Wärmeeinwirkung zur Anpassung des Brillengestells ermöglichen.

Anstelle der dargestellten zwei Holme 6, 7 können auch mehr Holme vorgesehen sein, beispielsweise drei im Abstand zueinander angeordnete Holme. Anstelle der dargestellten Ausführung mit einem einzigen ununterbrochenen Durchbruch 9 kann auch vorgesehen sein, diesen Durchbruch durch einen die beiden Holme 6, 7 verbindenden Steg 11 zu unterteilen, der in Fig. 2 mit strichpuktierten Linien angedeutet ist.

## Patentansprüche

1. Bügel für Brillengestell mit einem länglichen Bügelsteg (4), der in einem demgegenüber verbreiterten Ohrteil (5) endet, dadurch gekennzeichnet, daß das Ohrteil (5) aus mindestens zwei schmalen länglichen Holmen (6, 7) aus im wesentlichen starrem Material besteht, die im Abstand zueinander angeordnet und an ihren beiden Enden starr miteinander verbunden sind und zwischen denen sich ein länglicher Durchbruch (9) befindet.

2. Bügel nach Anspruch 1, dadurch gekennzeichnet, daß die beiden Holme (6, 7) des Ohrteils (5) angenähert parallel zueinander verlaufen.

3. Bügel nach Anspruch 1, dadurch gekennzeichnet, daß die beiden Holme (6, 7) am äußeren Ende zu einem undurchbrochenen Flächenstück (8) verbunden sind.

4. Bügel nach Anspruch 1, dadurch gekennzeichnet, daß sich der längliche Duchbruch (9) an seinen beiden Enden verjüngt.

5. Bügel nach Anspruch 1, dadurch gekennzeichnet, daß sich eine Metalleinlage (10) des Bügels (3) durch mindestens einen der beiden Holme (7) erstreckt.

6. Bügel nach Anspruch 5, dadurch gekennzeichnet, daß sich die Metalleinlage (10) durch den unteren Holm (7) erstreckt.

7. Bügel nach Anspruch 1, dadurch gekennzeichnet, daß das die beiden Holme (6, 7) aufweisende Ohrteil (5) von dem länglichen Bügelsteg (4) nach unten abgewinkelt ist und daß der Durchbruch (9) mindestens bis zum Übergang vom Bügelsteg (4) in das abgewinkelte Ohrteil (5) reicht.

8. Bügel nach Anspruch 7, dadurch gekennzeichnet, daß sich der Durchbruch (9) bis in den geraden Teil des Bügelstegs (4) erstreckt.

9. Bügel nach Anspruch 1, dadurch gekennzeichnet, daß sich das aus den beiden Holmen (6, 7) bestehende Ohrteil (5) angenähert in Verlängerung des länglichen Bügelstegs (4) erstreckt.

10. Bügel nach Anspruch 1, dadurch gekennzeichnet, daß sich der untere Holm (7) angenähert in Verlängerung des länglichen Bügelstegs (4) erstreckt.

11. Bügel nach Anspruch 1, dadurch gekennzeichnet, daß die Holme ( 6, 7) durch mindestens einen den Durchbruch (9) unterteilenden Steg (11) verbunden sind.

## Claims

1. Side-member for spectacle frames with an elongated member rod (4) terminating in an ear part broadened relative to said elongated rod, characterized in that the ear part (5) consists of at least two narrow elongated spars (6, 7) of an essentially rigid material, spaced apart and rigidly connected at both of their ends with each other, and with an elongated opening (9) located between them.

2. Side-member according to Claim 1, characterized in that the two spars (6, 7) of the ear part (5) are approximately parallel to each other.

3. Side-member according to Claim 1, characterized in that the two spars (6, 7) are joined at their outer ends into an uninterrupted flat piece (8).

4. Side-member according to Claim 1, characterized in that the elongated opening (9) tapers off at both ends.

5. Side-member according to Claim 1, characterized in that a metal insert (10) of the side-member (3) extends through at least one of the two spars (7).

6. Side-member according to Claim 5, characterized in that the metal insert (10) extends through the lower spar (7).

7. Side-member according to Claim 1, characterized in that the ear part (5) comprising the two spars (6, 7) is bent down at an angle from the elongated rod (4) and that the opening (9) extends at least to the transition from the elongated rod (4) into the angled ear part (5).

8. Side-member according to Claim 7, characterized in that the opening (9) extends into the straight part of the elongated rod (4).

9. Side-member according to Claim 1, characterized in that the ear part (5), which consists of the two spars (6, 7) extends approximately in an extension of the elongated rod (4).

10. Side-member according to Claim 1, characterized in that the lower spar (7) is located approximately in an extension of the elongated rod (4).

11. Side-member according to Claim 1, characterized in that the spars (6, 7) are connected with each other by at least one web (11) dividing the passage (9).

## Revendications

1. Branche pour montures de lunettes comportant une barrette longitudinale (4) qui se termine par une partie oreille (5) élargie par rapport à la branche, caractérisée en ce que la partie oreille (5) est constituée d'au moins deux ailes longitudinales étroites (6, 7) formées d'un matériau sensiblement rigide, qui sont agencées à distance l'une de l'autre, sont raccordées de manière rigide l'une à l'autre à leurs deux extrémités et entre lesquelles se trouve une découpe longitudinale (9).

2. Branche selon la revendication 1, caractérisée en ce que les deux ailes (6, 7) de la partie oreille (5) s'étendent plus ou moins parallèlement l'une à l'autre.

3. Branche selon la revendication 1, caractérisée en ce que les deux ailes (6, 7) sont reliées à l'extrémité externe à une section de surface ininterrompue (8).

4. Branche selon la revendication 1, caractérisée en ce que la découpe longitudinale (9) s'amincit à ses deux extrémités.

5. Branche selon la revendication 1, caractérisée en ce qu'une garniture métallique (10) de la branche (3) s'étend à travers au moins une des deux ailes (7).

6. Branche selon la revendication 5, caractérisée en ce que la garniture métallique (10) s'étend à travers l'aile inférieure (7).

7. Branche selon la revendication 1, caractérisée en ce que la partie oreille (5) présentant les deux ailes (6, 7) est coudée vers le bas vis-à-vis de la barrette longitudinale (4) et la découpe (9) s'étend au moins jusqu'à la transition de la barrette (4) avec la partie oreille coudée (5).

8. Branche selon la revendication 7, caractérisée en ce que la découpe (9) s'étend jusque dans la partie droite de la barrette (4).

9. Branche selon la revendication 1, caractérisée en ce que la partie oreille (5) constituée des deux ailes (6, 7) s'étend approximativement dans le prolongement de la barrette longitudinale (4).

10. Branche selon la revendication 1, caractérisée en ce que l'aile inférieure (7) s'étend approximativement dans le prolongement de la barrette longitudinale (4).

11. Branche selon la revendication 1, caractérisée en ce que les ailes (6, 7) sont reliées au moins par une barrette (11) divisant la découpe (9).
